# EUROPEAN PATENT APPLICATION

(11) **EP 1 975 929 A1**
(43) Date of publication of application: **01.10.2008**
(21) Application number: 08004707.9
(22) Date of filing: 13.03.2008
(51) Int. Cl.: G11B 5/86

(54) **Method of magnetic transfer and magnetic recording medium**

(30) Priority: 30.03.2007 JP 2007095557
(71) Applicant: FUJIFILM Corporation, Minato-ku Tokyo 106-8620 (JP)
(72) Inventor: Nagao, Makoto, Odawara-shi Kanagawa (JP); Fujiwara, Naoto, Odawara-shi Kanagawa (JP); Yasunaga, Tadashi, Odawara-shi Kanagawa (JP); Sugita, Ryuji, Hitachi-shi Ibaraki (JP); Komine, Takashi, Hitachi-shi Ibaraki (JP)
(74) Representative: Grünecker, Kinkeldey, Stockmair & Schwanhäusser Anwaltssozietät

(57) **Abstract**

The present invention provides a method of magnetic transfer comprising: an initial magnetization step of performing an initial magnetization by applying a DC magnetic field perpendicular to a disk shaped perpendicular magnetic recording medium (10) which is formed by laminating a soft magnetic layer (13) and a magnetic layer (16) on a substrate; an initial magnetization cleaning step of applying an in-plane magnetic field having an intensity larger than 100 [Oe] and less than an intensity of Hn, to the perpendicular magnetic recording medium (10) after passed through the initial magnetization step in radial direction which directed from a center to an outer of the perpendicular magnetic recording medium (10). After or in a time of the magnetic transfer, a magnetic cleaning may be performed by applying an in-plane magnetic field having the same intensity as the initial magnetization cleaning step in radial direction instead of the initial magnetization cleaning or in combination.

## Description

### BACKGROUND OF THE INVENTION

### Field of the Invention

The present invention relates to a method of magnetic transfer and a magnetic recording medium produced by the method. More particularly, the invention relates to a technique to magnetically transfer a magnetic information pattern, such as servo information, to a magnetic recording medium (a magnetic disk) which is a perpendicular magnetic recording type having a direction of recording magnetization perpendicular to the surface of the medium.

### Description of the Related Art

Recently, a magnetic record reproduction apparatus, in order to realize miniaturization and high volume, tends to be higher in recording density. In particular, in the field of a hard disk drive (HDD) as a representative magnetic recording apparatus, technologies are advancing rapidly.

With an increase in information volume, there is a demand for a magnetic recording medium which is high in memory capacity, low in cost and preferably requires a short time to read out a necessary part of data (a magnetic recording medium which allows so-called high-speed access). In such a high recording density magnetic medium, the recording area is formed by narrow data tracks. In order to cause a magnetic head to accurately trace such narrow data tracks and reproduce the data at a high S/N ratio, the so-called servo tracking technique takes a great role. A sector servo system has been widely employed to perform the servo tracking.

In the sector servo system, servo information including a servo signal for positioning a track, an address information signal of the track, and a reproduction clock signal is recorded in servo fields correctly arranged with a fixed angle and the like on a data surface of a magnetic recording medium such as a magnetic disk, and a magnetic head scans the servo fields to read the servo information and corrects the position of the head while locating the head.

In order to perform the servo tracking, it is necessary to write servo information on the magnetic recording medium as a preformat upon production of the magnetic recording medium. At the present, such preformat recording is performed by the use of a specialized servo recording apparatus. A currently used servo recorder has, for example, a magnetic head having a head width about 75% of a track pitch. A magnetic disk is rotated in a state in which the magnetic head is disposed close to the magnetic disk; meanwhile a servo signal is recorded for each half track while the magnetic head is moved from the outer edge to the inner edge of the magnetic disk. Thus it takes a long time to perform preformat recording on a magnetic disk, resulting in low production efficiency and increase in cost.

Therefore, as an accurate and efficient method of preformatting, a method of magnetically transferring information on a master recording medium, which has a pattern corresponding to servo information formed on, to a magnetic recording medium is disclosed in Japanese Patent Application Laid-Open No. 2003-272142 and Japanese Patent Application Laid-Open No. 2001-297435.

In such magnetic transfer, a master recording medium is used which has a transfer pattern including concavo-convex patterns according to information to be transferred to a magnetic recording medium (slave medium) such as a transfer magnetic disk, and a magnetic field for recording is applied in a state in which the master recording medium and the magnetic recording medium are in contact with each other, so that a magnetic pattern corresponding to information (for example, servo information) recorded with the concavo-convex patterns of the master recording medium is magnetically transferred to the magnetic recording medium. In this method, recording can be statically performed without changing the relative positions of the master recording medium and the magnetic recording medium, preformat information can be accurately recorded, and quite a short recording time can be achieved.

Japanese Patent Application Laid-Open No. 2003-272142 discloses a magnetic transfer method with in-plane magnetic recording for recording magnetization information by in-plane magnetization parallel to a magnetic recording medium and Japanese Patent Application Laid-Open No. 2001-297435 discloses a magnetic transfer method with perpendicular magnetic recording for recording magnetization information to be transferred to a magnetic recording medium by perpendicular magnetization.

In comparison with the in-plane magnetic recording method, the perpendicular magnetic recording method has the potential to realize a big progress of the high recording density. As the higher recording density required in recent years, the technique of the perpendicular magnetic recording has been developed and put to practical use.

However, a perpendicular magnetic recording medium has a problem that a magnetic field attributed to a domain wall of a soft magnetic under layer (a backup layer) formed under a recording layer (a magnetic layer) is superimposed as a noise.

In case that a servo information etc. is magnetically transferred to the perpendicular magnetic medium, a magnetic field in the vicinity of a coercive force Hc of the magnetic layer is applied. The higher coercive force Hc is needed to realize the high recording density and also a magnetic applying device to apply a high transfer magnetic suited to the coercive force is need. Therefore, a technique that makes it possible to perform a magnetic transfer with a good quality by applying a low transfer magnetic field is desired.

### SUMMARY OF THE INVENTION

The present invention has been made in view of the above circumstances and has an object to provide a magnetic transfer method which can obtain a good reproduction signal by reducing the noise attributed to the soft magnetic under layer of the perpendicular magnetic recording medium and a magnetic recording medium produced by the method. In addition, the present invention has an object to provide a magnetic transfer method to perform the magnetic transfer with a good quality by applying a low transfer magnetic field to the perpendicular magnetic recording medium and a magnetic recording medium produced by the method.

To achieve the object above, a first aspect of the present invention is a method for magnetic transferring comprising the steps of: an initial magnetization step of performing an initial magnetization by applying a DC magnetic field perpendicular to a disk shaped perpendicular magnetic recording medium which is formed by laminating a soft magnetic layer and a magnetic layer on a substrate; an initial magnetization cleaning step of applying an in-plane magnetic field having an intensity in range equal to or larger than 100 [Oe], to equal to or less than an intensity of an inverse magnetic domain generated magnetic field Hn, to the perpendicular magnetic recording medium after passed through the initial magnetization step in radial direction which directed from a center to an outer of the perpendicular magnetic recording medium; a contact step of closely contacting a concavo-convex pattern on a master medium which corresponds to a information signal to be transferred to the perpendicular magnetic recording medium after passed through the initial magnetization cleaning step by overlapping the master medium with the perpendicular magnetic recording medium; and a transfer step of magnetically transferring the information signal to the magnetic layer of the perpendicular magnetic medium by applying a magnetic field to the perpendicular magnetic recording medium in the state of being closely contacted to the master medium.

A second aspect of the present invention is a method for magnetic transferring comprising the steps of: an initial magnetization step of performing an initial magnetization by applying a DC magnetic field perpendicular to a disk shaped perpendicular magnetic recording medium which is formed by laminating a soft magnetic layer and a magnetic layer on a substrate; a contact step of closely contacting a concavo-convex pattern on a master medium which corresponds to a information signal to be transferred to the perpendicular magnetic recording medium after passed through the initial magnetization step by overlapping the master medium with the perpendicular magnetic recording medium; a transfer step of magnetically transferring the information signal to the magnetic layer of the perpendicular magnetic recording medium by applying a perpendicular magnetic field directed opposite to the initial magnetization step to the perpendicular magnetic recording medium in the state of being closely contacted to the master medium; and a cleaning step after the transfer of applying an in-plane magnetic field having an intensity in range equal to or larger than 100 [Oe], to equal to or less than an intensity of an inverse magnetic domain generated magnetic field Hn, to the perpendicular magnetic recording medium after passed through the transfer step in radial direction which directed from a center to an outer of the perpendicular magnetic recording medium.

A third aspect of the present invention is a method for magnetic transferring comprising the steps of: an initial magnetization step of performing an initial magnetization by applying a DC magnetic field perpendicular to a disk shaped perpendicular magnetic recording medium which is formed by laminating a soft magnetic layer and a magnetic layer on a substrate; a contact step of closely contacting a concavo-convex pattern on a master medium which corresponds to a information signal to be transferred to the perpendicular magnetic recording medium after passed through the initial magnetization step by overlapping the master medium with the perpendicular magnetic recording medium; a cleaning step during magnetic transfer of concurrently performing the steps of: magnetically transferring the information signal to the magnetic layer of the perpendicular magnetic recording medium by applying a perpendicular magnetic field directed opposite to the initial magnetization step to the perpendicular magnetic recording medium in the state of being closely contacted to the master medium; and applying an in-plane magnetic field having an intensity in range equal to or larger than 100 [Oe], to equal to or less than an intensity of an inverse magnetic domain generated magnetic field Hn, to the perpendicular magnetic recording medium in radial direction which directed from a center to an outer of the perpendicular magnetic recording medium at the same time.

To achieve the object above, a fourth aspect of the present invention is a method for magnetic transferring, comprising the steps of: an initial magnetization step of performing an initial magnetization by applying a magnetic field having an oblique direction inclined within a range of ±50 degrees in a circumferential direction to a disk-shaped perpendicular magnetic recording medium which is formed by laminating a soft magnetic layer and a magnetic layer on a substrate when a line perpendicular to the perpendicular magnetic recording medium is set as 0 degree; a contact step of closely contacting a concavo-convex pattern on a master medium which corresponds to a information signal to be transferred to the perpendicular magnetic recording medium after passed through the initial magnetization step by overlapping the master medium with the perpendicular magnetic recording medium; and a transfer step of magnetically transferring the information signal to the magnetic layer of the perpendicular magnetic medium by applying a magnetic field to the perpendicular magnetic recording medium in the state of being closely contacted to the master medium.

A fifth aspect of the present invention is a method for magnetic transferring, comprising the steps of: an initial magnetization step of performing an initial magnetization by applying a DC magnetic field perpendicular to a disk shaped perpendicular magnetic recording medium which is formed by laminating a soft magnetic layer and a magnetic layer on a substrate; a contact step of closely contacting a concavo-convex pattern on a master medium which corresponds to a information signal to be transferred to the perpendicular magnetic recording medium after passed through the initial magnetization step by overlapping the master medium with the perpendicular magnetic recording medium; and a transfer step of magnetically transferring the information signal to the magnetic layer of the perpendicular magnetic recording medium by applying a magnetic field having a component in perpendicular direction opposite to the initial magnetization step to the perpendicular magnetic recording medium in the state of being closely contacted to the master medium, wherein when a line perpendicular to the perpendicular magnetic recording medium is set as 0 degree, a magnetic field having an oblique direction inclined within a range of ±50 degrees in a circumferential direction from the line is applied to a perpendicular magnetic recording medium.

An embodiment of implementing a combination of any aspects described above is possible.

Also, the present invention provides a perpendicular magnetic recording medium, wherein a servo signal information is recorded by the method of magnetic transfer according to any one of the first to fifth aspects.

According to the present invention, an accuracy of recording and reproducing, etc. can be improved by reducing a noise attributed to a soft magnetic under layer so that a high quality perpendicular magnetic recording medium with a small number of errors can be produced. It is possible to reduce the applied magnetic field at the time of magnetic transfer. Since a high accurate magnetic transfer can be performed with the magnetic field lower than conventional methods, a magnetic field applying device can achieve size down and low power consumption according to the present invention.

### BRIEF DESCRIPTION OF THE DRAWINGS

Figs. 1A to 1C are schematic views showing a method of magnetic transfer according to the embodiment of the present invention;
Fig. 2 is a pattern diagram of cross section of a slave disk;
Fig. 3 is a pattern diagram of cross section showing a magnetization direction in a magnetic layer (a recording layer) after a step of initial magnetization;
Figs. 4A to 4D are process diagrams showing a method of forming a master disk;
Figs. 5A to 5D are process diagrams showing another method of forming a master disk;
Figs. 6A to 6D are process diagrams showing a method of forming a master disk;
Fig. 7 is a plan view of a master disk;
Fig. 8 is an explanatory view of a step of magnetic transfer;
Fig. 9 is a schematic configuration diagram of a magnetic field applying device used in a step of magnetic transfer;
Fig. 10 is a pattern diagram of cross section showing a magnetization direction in a magnetic layer after a step of magnetic transfer;
Figs. 11A and 11B are explanatory views showing a step of initial magnetization and a cleaning step in the initial magnetization according to the first embodiment;
Fig. 12 is an explanatory view showing a configuration example of a apparatus which applies a magnetic field in the radial direction of a disk;
Figs. 13A and 13B are explanatory views of a slave disk which is obtained by cleaning in initial magnetization according to the first embodiment;
Fig. 14 is a pattern diagram of cross section showing a slave disk which is obtained in the comparative example without having the cleaning step in initial magnetization according to the first embodiment;
Fig. 15 is a table having data of an experimental result which show a benefit effect of the first embodiment;
Figs. 16A and 16B are explanatory views showing a step of magnetic transfer and a cleaning step after the magnetic transfer according to the second embodiment;
Fig. 17 is an explanatory view of a slave disk which is obtained by cleaning after magnetic transfer according to the second embodiment;
Fig. 18 is a pattern diagram of cross section of a slave disk which is obtained in the comparative example without having the cleaning step after magnetic transfer according to the second embodiment;
Fig. 19 is a table having data of an experimental result which show a benefit effect of the second embodiment;
Fig. 20 is an explanatory view showing a cleaning step during magnetic transfer according to the third embodiment;
Fig. 21 is a table having data of an experimental result which show a benefit effect of the third embodiment;
Fig. 22 an explanatory view showing a step of initial magnetization by applying an inclined magnetic field according to the sixth embodiment;
Fig. 23 is a schematic view of a magnetic field applying device to apply an inclined magnetic field;
Fig. 24 is a view showing a magnetization direction which is seen from an arrow C of Fig. 23;
Fig. 25 is a table having data of an experimental result which show a benefit effect of the sixth embodiment;
Fig. 26 is an explanatory view showing a step of magnetic transfer using an inclined magnetic field according to the seventh embodiment; and
Fig. 27 is a table having data of an experimental result which show a benefit effect of the seventh embodiment.

### DETAILED DESCRIPTION OF THE PREFERRED EMBODIMENTS

Referring to the accompanying drawings, a detailed description will be given below of preferred embodiments of the present invention.

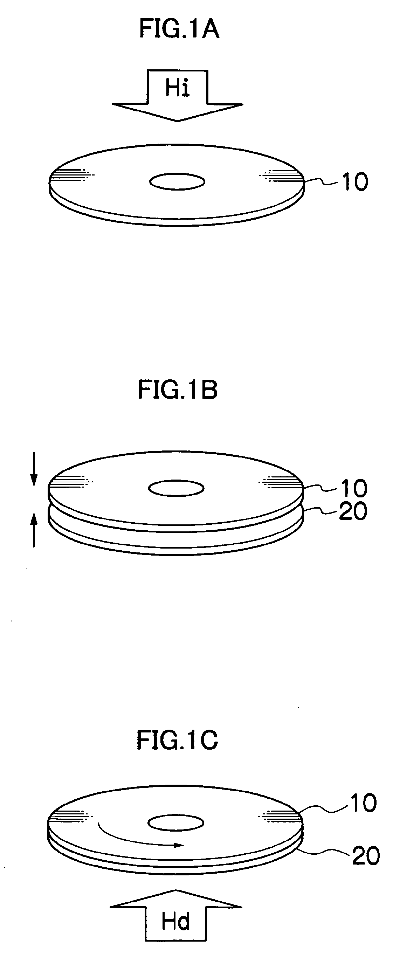

First of all, a magnetic transfer technique of perpendicular magnetic recording is outlined with referring to Figs. 1A to 1C. Figs. 1A to 1C are schematic views showing steps in a method of magnetic transfer of perpendicular magnetic recording. The symbol 10 in Figs. 1A to 1C is a slave disk as a magnetic disk to be magnetically transferred (corresponds to "a perpendicular magnetic recording medium") and the symbol 20 is a master disk as a master medium.

At first, an initial magnetization (an initial magnetization step) is performed by applying a DC magnetic field (Hi) in the perpendicular direction to the slave disk 10 as shown in Fig. 1A, and then the master disk 20 and the slave disk 10 are closely contacted (a close contact step) as shown in Fig. 1B. A magnetic transfer is performed by applying a magnetic field (Hd) in the opposite direction to the initial magnetization as shown in Fig. 1C while the both disks 10 and 20 are closely contacted to each other (a transfer step).

### [Magnetic Transfer Disk (Slave Disk)]

The slave disk 10 has a magnetic layer composed of a perpendicular magnetization film formed on one or both surfaces of a disk substrate, and a high-density hard disk is generally cited.

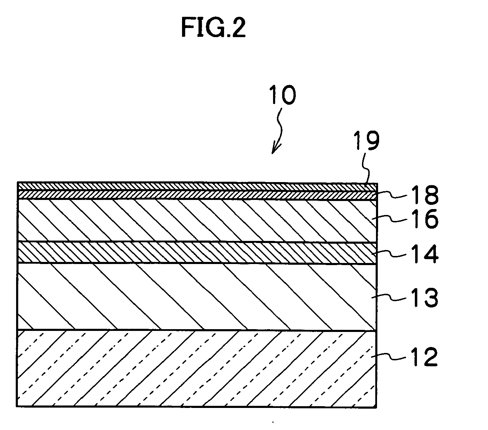

Fig. 2 is a pattern diagram of cross section of a slave disk. As shown in Fig. 2, the slave disk 10 has a soft magnetic layer (a soft magnetic under layer; SUL) 13, a nonmagnetic layer (a intermediate layer) 14 and a magnetic layer (a perpendicular magnetic recording layer) 16 laminated one over another on a substrate 12 which is a nonmagnetic such as glass. The upper surface of the magnetic layer 16 is covered by a protective layer 18 and a lubricant agent layer 19. In the present embodiment, the magnetic layer 16 is formed on a single surface of the substrate 12, but a magnetic layer may be provided on both of the front and rear surfaces of the substrate 12.

The disk substrate 12 is composed of material such as glass and Al (aluminum), and after the soft magnetic layer 13 is formed on the substrate 12, the nonmagnetic layer 14 and the magnetic layer 16 are formed.

The soft magnetic layer 13 has benefits such that perpendicular magnetized state of the magnetic layer 16 is stabilized and sensitivity upon recording and reproduction is improved. Soft magnetic materials such as CoZrNb, FeTaC, FeZrN, FeSi alloy, FeAl alloy, FeNi alloy such as permalloy, and FeCo alloy such as permedur, etc. are preferably used for the soft magnetic layer 13. The soft magnetic layer 13 has a magnetic anisotropy in the radial direction from the center to the outer of the disk.

The soft magnetic layer 13 has preferably a thickness of 50nm to 2,000 nm, and more preferably 80nm to 400nm.

The nonmagnetic layer 14 is provided for a reason such as enhancement of perpendicular magnetic anisotropy of the magnetic layer 16 formed later. Material used for the nonmagnetic layer 14 preferably includes Ti (titanium), Cr (chromium), CrTi, CoCr, CrTa, CrMo, NiAl, Ru (ruthenium), Pd (Palladium). The nonmagnetic layer 14 is formed by depositing the material described above using the sputtering technique. The thickness of the nonmagnetic layer 14 has preferably a thickness of 10mu to 150nm, and more preferably 20nm to 80nm.

The magnetic layer 16 is composed of the perpendicular magnetization film, and information is recorded on the magnetic layer 16. Material used for the magnetic layer 16 preferably includes Co (cobalt), Co alloy (CoPtCr, CoCr, CoPtCr, Ta, CoPtCrNbTa, CoCrB, CoNi, CoSm etc.), Fe and Fe alloy (FeCo, FePt, FeCoNi etc.). These materials have large magnetic flux density and perpendicular magnetic anisotropy with the conditioned film forming and composition of the film. The magnetic layer 16 is formed by depositing the material described above using the sputtering technique. The magnetic layer 16 has preferably a thickness of 10nm to 500nm, and more preferably 20nm to 200nm.

Specifically, in the present embodiment, a disk shape glass substrate with an outer diameter of 65mm is used for the substrate 12 of the slave disk 10. The glass substrate is placed in a chamber of a sputtering device, and after decreasing the pressure to 1.33×10⁻⁵ Pa (1.0×10⁻⁷ Torr), Ar (argon) gas is introduced into the chamber and a first SUL layer with a thickness of 80nm is deposited by the sputtering using a CoZrNb target in the chamber. A substrate temperature is the room temperature during the deposition of the first SUL layer. On the above the first SUL layer, a Ru layer with a thickness of 0.8nm is deposited by the sputtering using a Ru target. A second SUL layer with a thickness of 80nm is also desposited on the above the Ru layer by the sputtering using a CoZrNb target. The SUL formed by the sputtering with the condition of being magnetized to have a magnetic field of at least 500e in the radial direction is heated to 200°C and cooled down to the room temperature.

Then, the nonmagnetic layer 14 formed by CrTi with a thickness of 60nm is deposited by the sputtering technique with discharge using CrTi target with the substrate temperature of 200°C.

After forming the nonmagnetic layer 14, as Ar (argon) gas is introduced as same as the above, the magnetic layer 16 formed by CoCrPt with a thickness of 25nm is deposited by the sputtering technique with discharge using CoCrPt target in the same chamber with the substrate temperature of 200°C.

The magnetic transfer disk (slave disk) 10 which have the soft magnetic layer, the nonmagnetic layer and the magnetic layer on the glass substrate is produced by the process above.

### [Initial Magnetization of Magnetic Transfer Disk]

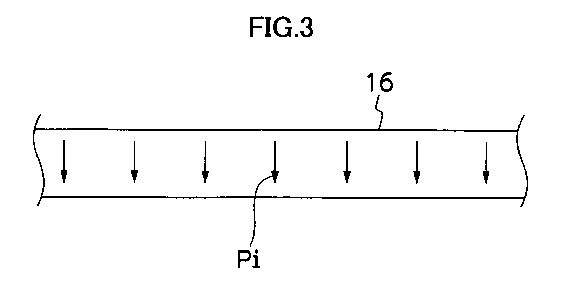

Next, the slave disk 10 formed is initially magnetized. As shown in Fig. 1A, the initial magnetization (in DC magnetic field) is carried out by an apparatus (a magnetizing device not shown in Figs) capable of applying an initial magnetic field Hi to a disk surface of the slave disk 10 in the perpendicular direction thereof. Specifically, the initial magnetization is carried out by generating the magnetic field having a coercive force which is equal to or greater than the coercive force Hc of the slave disk 10 as the initial magnetic field Hi. As shown in Fig. 3, the initial magnetization Pi is done to the magnetic layer 16 of the slave disk 10 in the perpendicular direction to the surface of the slave disk 10. The step of the initial magnetization described above can be performed by relatively rotating the slave disk 10 to the magnetizing device.

A step of magnetizing (with a weak magnetic field) in the parallel direction to the radial direction of the disk surface after the step of the initial magnetization followed by the magnetization of the perpendicular magnetization stated above is added to the embodiment of the present invention. It prevents to generate a domain wall by aligning the direction of the magnetization of the soft magnetic layer 13 with magnetizing (with a weak magnetic field) in parallel to the radial direction of the disk.

### [Master Disk]

Next, a master disk 20 as a master recording medium is described.

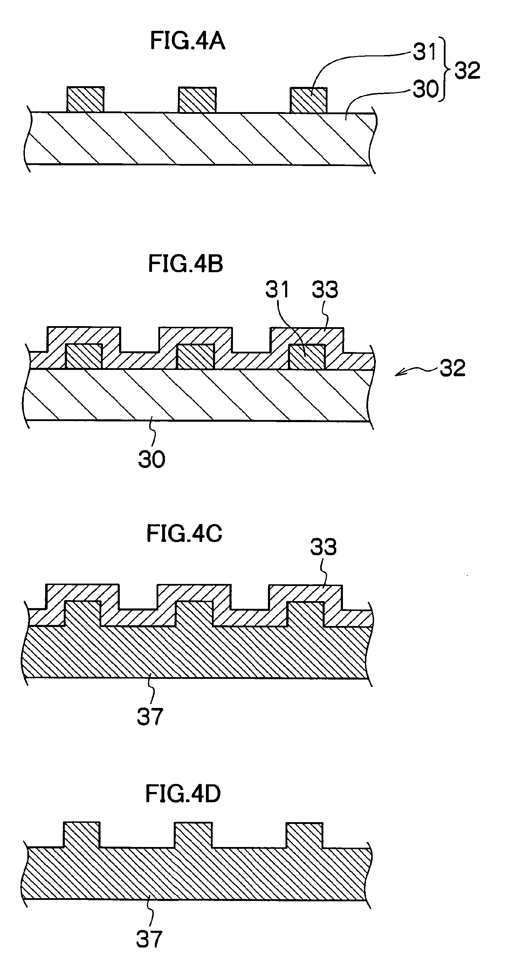

A method of producing the master disk 20 is described as shown in Figs. 4A to 4D. First of all, a step of producing a press master used in the present embodiment is explained.

As shown in Fig. 4A, a photoresist layer is coated by a spin coater etc. on a circular substrate 30 having a flat and smooth surface composed of glass or quartz glass, and after pre-baking, the photoresist layer is irradiated with a laser beam (or an electron beam) modulated corresponding to a signal to be recorded, while rotating the circular substrate 30 forming a predetermined pattern on almost the entire surface of the photoresist layer. Subsequently, the exposed substrate 30 is immersed in developing solution to remove the exposed portion of the photoresist layer, and thereby, a glass master disk 32 on which the photoresist layer 31 is formed on the predetermined area of the substrate 30 is manufactured.

A shown in Fig. 4B, Ni is plated (electroforming) on a surface of the glass master disk 32 which is the side having the photoresist layer 31 formed, and thereby forming a Ni master disk 33 having a positive, concavo-convex patterns on a surface thereof with a predetermined thickness, and the Ni master disk 33 is peeled off from the glass master disk 32.

Although the Ni master disk 33 may be used as a press master disk (mold) for the stamper method, a soft magnetic layer, a protective layer or the like, as required, are coated on the concavo-convex patterns of the Ni master disk 33, providing the press master disk (mold) for the stamper method. By providing the soft magnetic layer, protective layer or the like in this way, it is possible to improve magnetic characteristics of the magnetic transfer disk subsequently manufactured.

Materials comprising the Ni master disk 33 mainly used include Ni and Ni alloy. As a method for forming the Ni master disk 33, aside from the plating method such as the electroless plating method described previously, a vacuum deposition method such as the sputtering method and the ion plating method can be used. After performing the vacuum deposition method described above, the Ni master disk 33 can be also formed by the electrolytic plating method and likes. In addition, the resist coated on the substrate may be positive type or negative type to use, and so it has to be noted that the exposed pattern of the positive and negative type is reversed to each other.

Next, using the Ni master disk 33 peeled off as the press master disk, a resin substrate 37 is manufactured by injection molding etc., as shown in Fig. 4C. Resin material of the resin substrate 37 includes acrylic resin such as polycarbonate and polymethyl methacrylate, vinyl chloride resin such as polyvinyl chloride and vinyl chloride copolymer, epoxy resin, amorphous polyolefin, and polyester. Among these resin materials, from the view points of moisture resistance, dimensional stability and cost, at the present time of writing, polycarbonate is preferable.

In the case where the resin substrate 37 is formed by the injection molding, a burr or the like may be produced on the resin substrate 37 which is a molded article, but such burr or the like is removed by a burnisher or polishing.

A method of forming the resin substrate 37, other than the injection molding, may also include a method using ultraviolet curing resin, electron beam curing resin or the like. In this case, after the ultraviolet curing resin or electron beam curing resin is coated on the press master disk by a method of spin coat or bar coat, it is irradiated with an ultraviolet ray or electron beam to cure, and subsequently it is peeled off from the press master disk to provide the resin substrate 37.

The resin substrate 37 manufactured according to the processes described above as shown in Fig. 4D, on the surface of the resin substrate, a projecting pattern (a concavo-convex pattern) having the height of 30 to 150nm is provided.

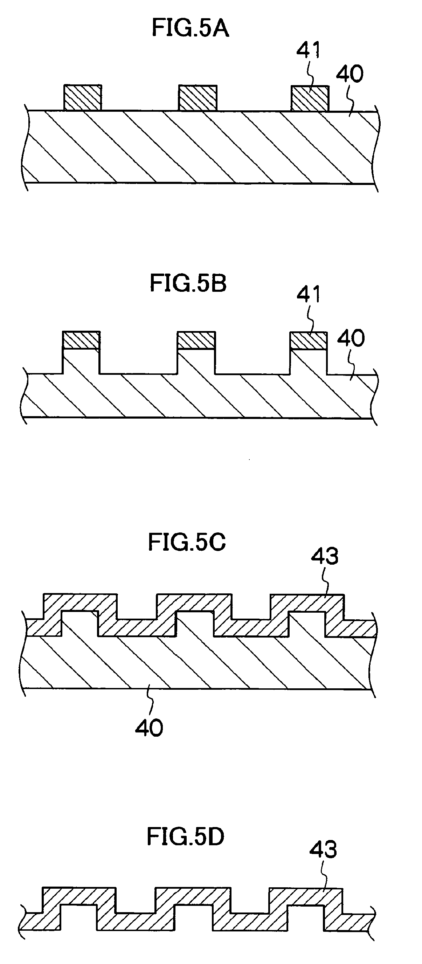

A method of producing the Ni master disk 33 to produce the resin substrate 37 is not limited to the steps above. A method of producing the Ni master disk 33 other than the steps above is described below with reference to Figs. 5A to 5D.

A photoresist layer is coated by a spin coater etc. on an approximate circular Si substrate 40 having a flat and smooth surface, and after pre-baking, the photoresist layer is irradiated with a laser beam (or an electron beam) modulated corresponding to a signal to be recorded, while rotating the Si substrate 40 forming a predetermined pattern on almost the entire surface of the photoresist layer. Subsequently, the exposed Si substrate 40 is immersed in developing solution to remove the exposed portion of the photoresist layer, and thereby, the Si substrate 40 on which the photoresist layer 41 is formed on the predetermined area of the Si substrate 40 is manufactured as shown in Fig. 5A.

As shown in Fig. 5B, dry etching by RIE (Reactive Ion Etching) and like is applied to a surface of the Si substrate 40 that a photoresist layer 41 is formed on. Specifically, the Si substrate 40 having the photoresist layer 41 formed on the surface is placed in a decompression chamber of a RIE device, and chlorine gas (Cl₂) is introduced into the decompression chamber after decreasing the pressure. Then, RIE is performed by applying RF power and generating plasma in the decompression chamber. The Si substrate 40 with the photoresist layer 41 is selectively etched by RIE thereby the regions in the Si substrate 40 where the photoresist layer 41 is not formed are etched by RIE. The Si substrate 40 having a concave and convex pattern formed thereon is produced by eliminating the photoresist layer 41 on the Si substrate 40 by using an organic solvent and like.

Then, a conducting film is formed on the surface, which has the concave and convex pattern, of the Si substrate 40 by depositing a metal material using the sputtering technique. Additionally, the Ni master disk 43 is formed by electroforming Ni as shown in Fig. 5C.

The Ni master disk 43 is produced by being peeled off from the Si substrate 40 as shown in Fig. 5D. The Ni master disk 43 is same as the Ni master disk 33 shown in Fig. 4B and using the Ni master disk 33 peeled off as the press master disk, a resin substrate 37 is manufactured by injection molding etc., as shown in Fig. 4C.

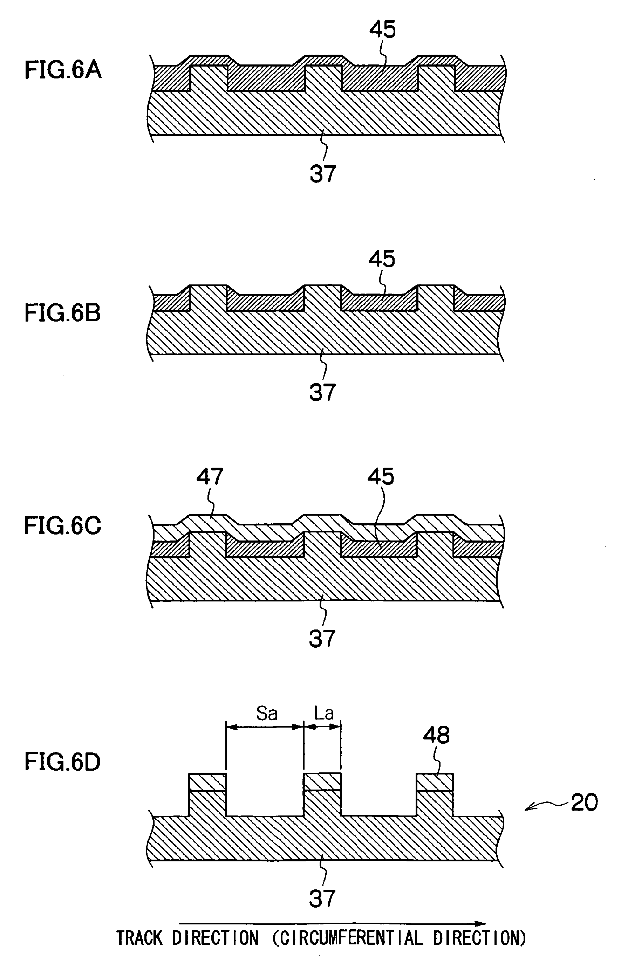

Subsequently, as shown in FIG. 6A, on a surface of the resin substrate 37 formed and of the side having the projecting pattern formed, a photoresist 45 is coated by a spin coater etc. to be cured. Specifically, in the case that the photoresist 45 is a negative photoresist, an ultraviolet ray is projected to polymerize. On the contrary, in the case of a positive photoresist, a baking process is performed to polymerize. Because the photoresist 45 is uniformly spread in the case of using the spin coater etc., it is formed thin in a convex portion which is the projecting pattern on the surface of the resin substrate 37, and thick in a concave portion except the convex portion.

Subsequently, as shown in FIG. 6B, a part of the photoresist 45 is removed by ashing with oxygen introduced. Specifically, the ashing is brought to a stop upon exposure of the surface of the projecting pattern of the resin substrate 37. In the ashing, because the photoresist 45 is removed uniformly in the depth direction and the photoresist 45 is formed thick in the concave portion, the photoresist 45 in this region is left behind, even if the surface of the convex portion of the projecting pattern of the resin substrate 37 is exposed.

Subsequently, as shown in FIG. 6C, a magnetic film 47 formed of soft magnetic material is formed on the resin substrate 37 by the plating or the vacuum evaporation, etc. Material constituting the magnetic film 47 includes preferably soft magnetic material having coercive force Hc which is not greater than 48 kA/m (<600 Oe). Specifically, it may include Co, Co alloy (CoNi, CoNiZr, CoNbTaZr etc.), Fe, Fe alloy (FeCo, FeCoNi, FeNiMo, FeAlSi, FeAl, FeTaN), Ni and Ni alloy (NiFe). From the view point of magnetic characteristics, FeCo and FeCoNi are especially preferable. Further, a thickness of the magnetic film 47 is preferably in the range of 20nm to 320 nm, and more preferably in the range of 100 nm to 200 nm. The magnetic film 47 is provided by sputtering, electrolytic plating, etc., using a target of the material described above.

Subsequently, the magnetic film 47 formed on the photoresist 45 is removed by a liftoff technique. Specifically, the substrate 37 having the magnetic film 47 formed thereon is immersed in organic solution etc., and thereby, the magnetic film 47 formed on the photoresist 45 is removed together with the photoresist 45.

As shown in Fig.6D, the master disk 20 having the concavo-convex patterns which have the magnetic layer 48 on the surface of the convex region is produced. The concavo-convex patterns on the master disk 20 obtained in the process above, has Sa: a width in a track direction (circumferential direction) of the concavo region and La: a width in the track direction (circumferential direction) of the convex region. In the embodiment of the present invention, the master disk 20 is produced to have the ratio (Sa/La) between the widths of Sa and La of 1.3 to 1.9 more preferably, 1.45 to 1.75.

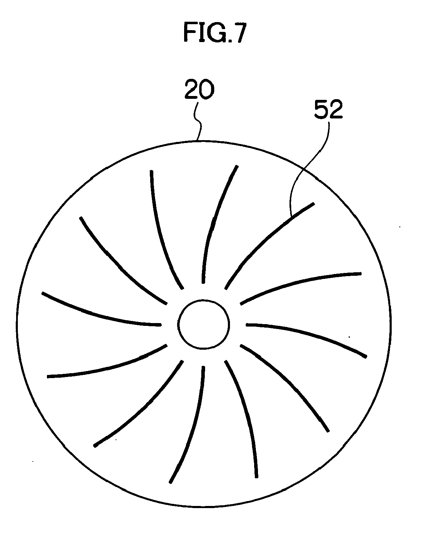

Fig. 7 shows a plane view of the master disk 20. As shown in Fig. 7, a servo pattern 52 comprising a concavo and convex pattern is formed on the surface of the master disk 20. Although it is not shown in Figs, a protective film of diamond-like carbon etc., on the magnetic layer 48 (in Fig. 6D) and further a lubricant agent layer on the protective film may be provided.

The magnetic layer 48 tends to be damaged at the moment of the master disk 20 being adhered to the slave disk 10. Therefore, the protective film and lubricant agent layer are provided in order to prevent the magnetic layer 48 from being damaged upon adhesion and unable to be used as a master disk 20. Further, the lubricant agent layer has an advantage of preventing a scratch from being produced from friction generated upon contact with the slave disk 10 and therefore improving durability.

Specifically, for the protective film, preferably, a diamond-like carbon film having a thickness of 5nm to 30nm is formed, and further, on the carbon film, the lubricant agent layer is formed. Also, in order to enhance adhesion between the magnetic layer 48 and the protective film, an adhesion enhancing layer of Si etc. may be formed on the magnetic layer 48 and subsequently, the protective film may be formed.

### [Close Contact Process]

Next, a step of closely contacting the master disk 20 produced by the process above and the slave disk 10 initially magnetized is performed (a close contact process) as shown in Fig. 1B.

Next, as shown in Fig. 1B, in the close contact process, the surface of the master disk 20 produced according to the processes described above on that the projecting pattern (the concavo-convex patterns) is formed thereon, and the surface of the magnetic transfer disk 40 that the magnetic layer 40b is formed thereon are adhered to one another by a predetermined press force.

A cleaning process (burnishing process etc.) which removes a small projection or an adhered dust article on the surface using a glide head or polishing body etc., as required, is reformed to the slave disk 10 before it is closely contacted to the master disk 20.

In addition, in the close contact process, as shown in Fig. 1B, there may be the case where the master disk 20 is closely contacted to one of surfaces of the slave disk 10, or the master disks 20 are closely contacted to both of surfaces of the slave disk 10 having the magnetic layers formed on both surfaces. In the latter case, there is an advantage of concurrent transfer to both surfaces.

### [Magnetic Transfer Process]

Next, a magnetic transfer process is described with reference to Fig. 1C.

On the slave disk 10 and the master disk 20 which are contacted with each other in the contact process, a recording magnetic field Hd is generated by a magnetic field applying device (not shown) in the opposite direction to initial magnetic fields Hi. Magnetic fluxes are generated by generating the recording magnetic field Hd, and the magnetic fluxes enter the slave disk 10 and the master disk 20, so that magnetic transfer is performed.

The size of the recording magnetic field Hd approximately equals to Hc of a magnetic material which forms the magnetic layer 16 of the slave disk 10.

For magnetic transfer, a rotating device (not shown) is provided to rotate the slave disk 10 and master disk 20 closely contacted each other. Meanwhile, the recording magnetic field Hd is applied by a magnetic field applying device and information including the concavo-convex patterns formed on the master disk 20 is magnetically transferred to the magnetic layer 16 of the slave disk 10. In addition to this configuration, a mechanism may be provided to rotate the magnetic field applying devices relative to the slave disk 10 and the master disk 20.

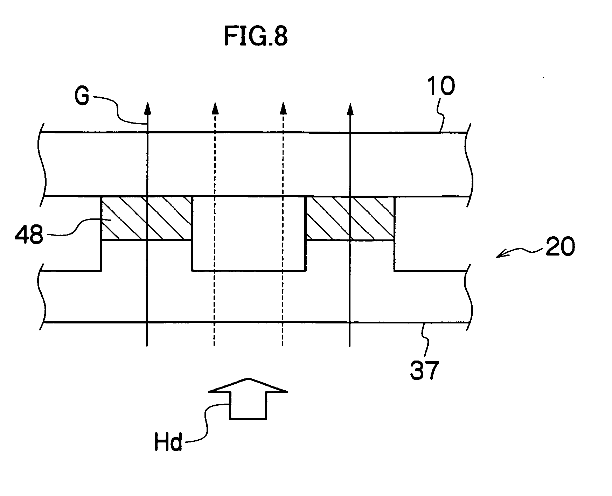

FIG. 8 is a cross sectional view shows the slave disk 10 and the master disk 20 in the magnetic transfer process. As shown in FIG. 8, the slave disk 10 is contacted with the master disk 20 in which the concavo-convex patterns are formed on the surface of the substrate 37 and the magnetic layer 48 is formed thereon. In this state, in a convex region of the master disk 20, the magnetic layer 48 of the master disk 20 is contacted with the magnetic layer 16 of the slave disk 10.

Thus when the recording magnetic field Hd is applied, in the convex region of the master disk 20, that is, in a region where the magnetic layer 48 of the master disk 20 is in contact with the magnetic layer 16 of the slave disk 10, a magnetic flux G becomes strong enough to align the magnetization direction in the magnetic layer 48 of the master disk 20 with the direction of the recording magnetic field Hd. In this way, the magnetic information of the master disk 20 is transferred to the magnetic layer 16 of the slave disk 10. In contrast, in the concave region of the master disk 20, that is, in a region where the magnetic layer 48 is not formed, the magnetic flux G generated by being applied the recording magnetic field Hd is weak because of the absence of the magnetic layer 48 of the master disk 20. Therefore, the magnetization direction of the magnetic layer 16 of the slave disk 10 is not changed and the direction of initial magnetization is kept.

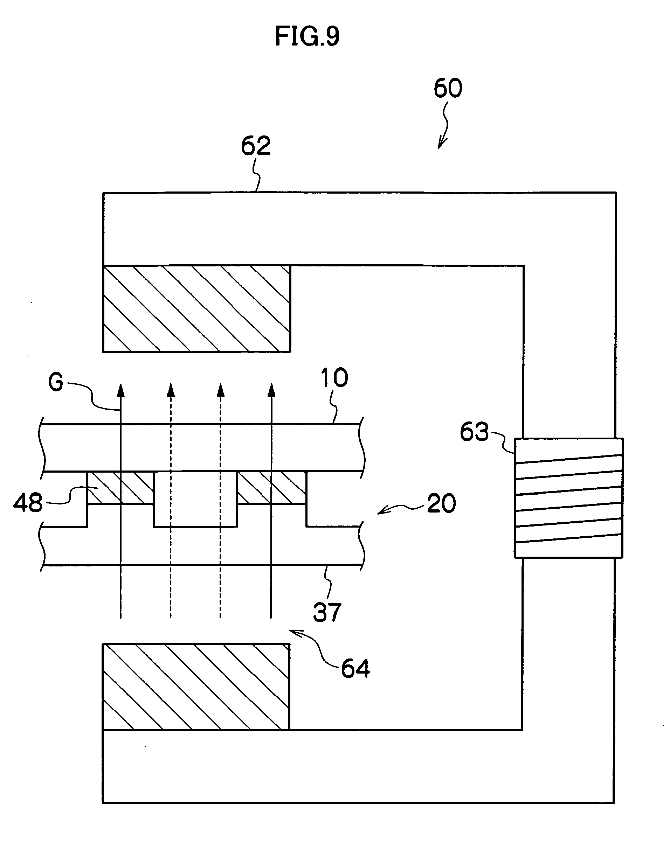

FIG. 9 shows the detail of a magnetic transfer device used for magnetic transfer. A magnetic transfer device has a magnetic field applying device 60 which is made up of an electromagnet having a coil 63 wound around a core 62. A magnetic field which is perpendicular to the master disk 20 and the magnetic layer 16 of the slave disk 10 closely contacted each other is generated in the gap 64 by passing current through the coil 63. The direction of the generated magnetic field can be changed according to the direction of current passing through the coil 63. Therefore, the magnetic transfer device is able to perform both of the initial magnetization of the slave disk 10 and the magnetic transfer. In the case that a magnetic transfer is performed after the initial magnetization done by the magnetic transfer device, current is passed through the coil 63 of the magnetic field applying device 60 in the reverse direction from the current passing through the coil 63 during initial magnetization. The recording magnetic field can be generated in the reverse direction to the direction of the initial magnetization. For magnetic transfer, a rotating device (not shown) is provided to rotate the contacted slave disk 10 and master disk 20. Meanwhile, the recording magnetic field Hd is applied by the magnetic field applying device 60 and information recorded in the protruded pattern formed on the master disk 20 is magnetically transferred to the magnetic layer 16 of the slave disk 10. In addition to this configuration, a mechanism may be provided to rotate the magnetic field applying devices 60 relative to the slave disk 10 and the master disk 20.

In the present embodiment, the magnetic transfer is performed by applying the magnetic recording field Hd having an intensity of 75% to 105%, more preferably 85% to 95% of coercive force Hc of the magnetic layer 16 of the slave disk 10.

In the embodiment of the present invention, a step of applying a magnetic field (which is a weak magnetic field having an intensity equal to or larger than 100 [Oe] and equal to or smaller than the reverse magnetic domain nucleation field Hn of the magnetic transfer layer 16 in the salve disk 10) in the radial direction of the disk is performed at a time of or after the perpendicular magnetic transfer step described above. The detailed description is stated hereinafter. The result of the step of applying the weak magnetic field in the radial direction, the salve disk 10 after transferred can be magnetically cleaned and the direction of the magnetic field in the soft magnetic layer 13 is aligned, thereby the degradation of the signal quality affected by the domain wall can be prevented. Both or either one of: the step of applying the weak magnetic field (hereinafter referred to as "the cleaning step in initial magnetization") after the initial magnetization of the slave disk 10; and the step of applying the weak magnetic filed which is equal to or smaller than Hn (hereinafter referred to as "the cleaning step after magnetic transfer" or "the cleaning step during magnetic transfer") at a time of or after the perpendicular magnetic transfer step; may be performed.

In case that "the cleaning step after magnetic transfer" is performed after the step of the magnetic transfer, "the cleaning step after magnetic transfer" is performed to the slave disk 10 alone by taking off the slave disk 10 from the master disk 20 after the step of the magnetic transfer described above.

On the other hand, in case that "the cleaning step during magnetic transfer" is performed at a time of the step of the magnetic transfer, "the cleaning step during magnetic transfer" is performed with the slave disk 10 adhered to the master disk 20. The slave disk 10 is taken off from the master disk 20 after the step.

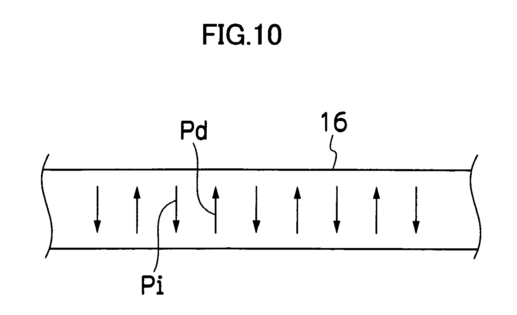

In the magnetic layer 16 of the slave disk 10, the information corresponding to magnetic patterns such as a servo signal can be recorded as a recording magnetization Pd having a magnetic field in the reverse direction to the direction of the initial magnetization Pi (referred to Fig. 10).

The concavo-convex patterns formed on the substrate 37 of the master disk 20 may be negative patterns reversed of the positive patterns shown in Fig. 6D in the present invention. In this case, the same magnetic patterns can be magnetically transferred to the magnetic layer 16 of the slave disk 10 by reversing the directions of the initial magnetic fields Hi and the recording magnetic field Hd. The present embodiment is described with an electromagnet as a magnetic field application device but the permanent magnet which can generate a magnetic field as well, may also be used.

Various forms of embodiments of the magnetic transfer methods realized by using the present invention are described hereinafter.

### [First embodiment]

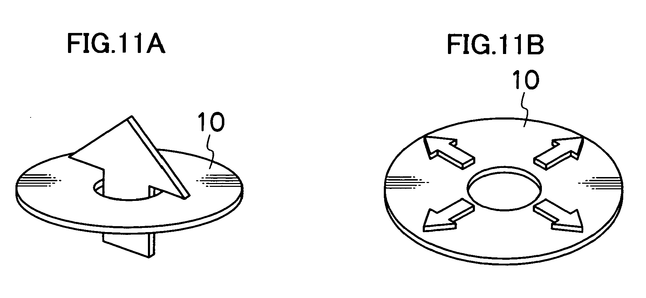

The initial magnetization is performed by applying the initial magnetic field Hi (DC magnetic field) to the slave disk 10 alone (without closely contacted to the master disk 20) in the perpendicular direction to the surface of the slave disk 10 as shown in Fig. 11A. After the initial magnetization step, the slave disk 10 is magnetically cleaned by being applied the in-plane magnetic field having the intensity equal to or larger than 100 [Oe] and equal to or smaller than the magnetic intensity (Hn) of the magnetic layer 16 in the radial direction (the direction from the center to the outer of the disk) of the disk. The cleaning step in the initial magnetization is performed to the salve disk 10 without being adhered to the master disk 20 as well as the initial magnetization.

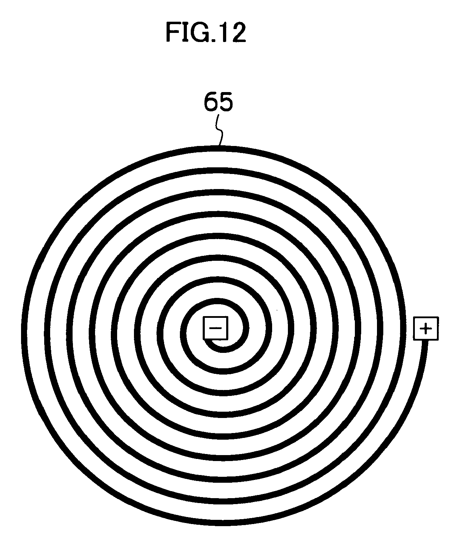

There is a method of applying a magnetic field including a magnetic field component of the radial direction by providing a magnet obliquely as a method of applying a magnetic field in the radial direction of the disk. Alternatively, an electric wire 65 which is spirally coiled is provided as shown in Fig. 12 and the disk is placed (orienting the center of the spiral of the electric wire 65 to the same of the disk) on the electric wire 65. Then, a magnetic field applying device used in the present embodiment may apply the magnetic field in the radial direction of the disk by applying an electric current to the electric wire 65.

After the cleaning step in the initial magnetization described above, the perpendicular magnetic transfer (the magnetic transfer process) is performed by applying the perpendicular magnetic field in the reverse direction relative to the initial magnetization with closely contacting the slave disk 10 to the master disk 20 (the contact process) as shown in Figs. 1B and 1C.

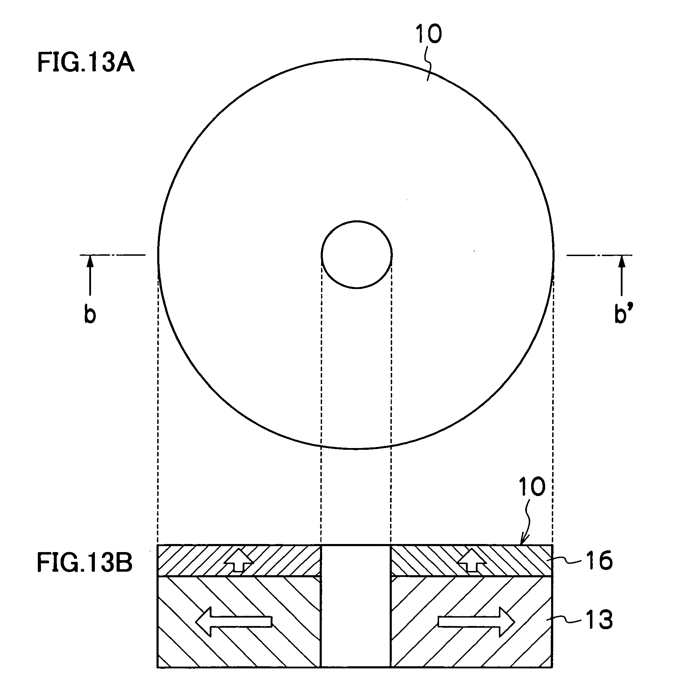

Figs. 13A and 13B show a pattern diagram of the slave disk 10 produced in the steps described in Figs. 11A and 11B. Fig. 13A is a plan view and Fig. 13B is a cross sectional view of Fig. 13A along the lines b-b'. Only the soft magnetic layer 13 and the magnetic layer 16 are shown in Fig. 13B as a matter of convenience of an explanation.

The soft magnetic layer 13 is uniformly magnetized in the radial direction (radiated outward) which is the direction from the center to the outer of the disk as shown in Figs. 13A and 13B. On the other hand, the magnetic layer 16 is uniformly magnetized in the perpendicular direction (the upward direction) of the disk.

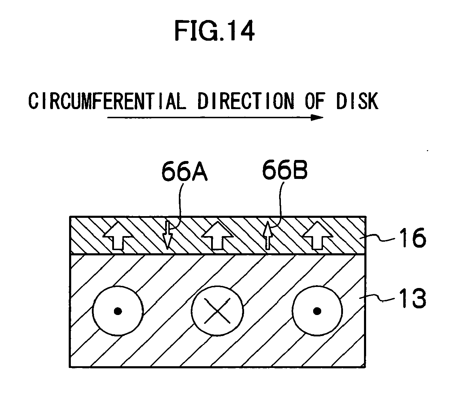

The result of an initial magnetization without the cleaning step in the initial magnetization described in Fig. 11B (in case of that only the initial magnetization in Fig. 11A is performed.) is shown in Fig. 14 for reference and comparison.

Fig. 14 shows a pattern diagram of cross section of the disk along the circumferential direction. More specifically, the crosswise direction of Fig. 14 shows the circumferential direction of the disk. A magnetic field component (shown as the symbol having inside of circle in Fig. 14) perpendicularly directed to the front surface of the paper and a magnetic field component (shown as the symbol having × inside of circle in Fig. 14) perpendicularly directed to the rear surface of the paper are mixed present in the soft magnetic layer 13 as shown in Fig. 14. Magnetic field components (66A and 66B in Fig. 14) in the perpendicular direction to the disk is generated in the area of the magnetic field 16 corresponding to the boundary (the domain wall) of the magnetic field components (in the soft magnetic layer 13) having directions opposed to each other. The magnetic field components 66A and 66B become noise to deteriorate signal quality.

The direction of magnetization is aligned (Fig. 13B) by the cleaning step in the initial magnetization described in Figs.11A to 13B so that the noise generation caused by the domain wall described above is prevented.

An embodiment having the initial magnetization in Fig. 11A and the cleaning step in the initial magnetization in Fig. 11B performed at the same time is also possible.

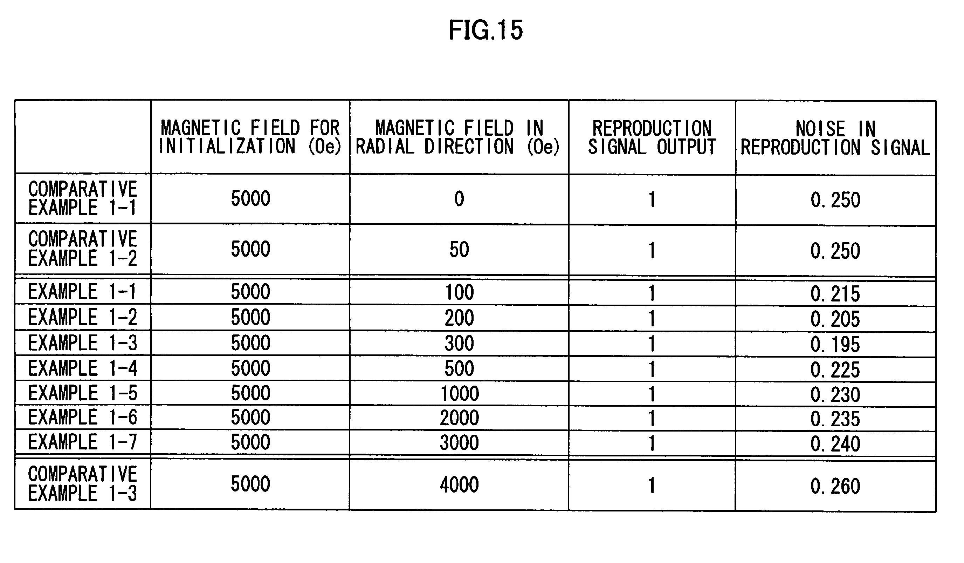

The result of in the proving test measuring advantageous effects of the first embodiment is shown in the table of Fig. 15. The proving test was given with a slave disk being magnetically cleaned by changing an intensity of the magnetic fields in the range of 0 to 4000 [Oe] which was applied in the radial direction after the slave disk was initialized by being applied a magnetic field having an intensity of 5000 [Oe] in the perpendicular direction. The coercive force Hc of the magnetic layer of the slave disk used in this proving test is 3000 [Oe]. A disk which concave-convex patterns having a size of 50nm to 300nm in the circumferential direction and a size of 50nm to 300nm in the radial direction are radially provided thereon is used to magnetically transfer the same patterns to a slave disk. After the magnetic transfer, the noise in the reproduced signal output is measured during reproducing the slave disk. A reproduced signal output in this proving test was normalized to the same output with the comparative example 1-1.

The configuration to evaluate a servo signal of a slave disk is described below.

The slave disk is attached to an axis of a spindle motor so as to be rotated at a predetermined speed (the number of revolutions). A magnetic head is provided over the surface of the slave disk having a predetermined flying height. The magnetic head is movable to a predetermined place by a positioner. The magnetic head is used for recording and reproducing.

A synchroscope (an oscilloscope) is connected to the magnetic head so that a read signal waveform from the magnetic head is displayed on the synchroscope (the oscilloscope). A spindle motor is also connected to the synchroscope (the oscilloscope) and the index signal outputted during a rotor of the spindle motor having a predetermined rotation angle is inputted as a trigger signal to the synchroscope (the oscilloscope).

The noise in reproduced signals is reduced in the slave disks (examples 1-1 to 1-7) which are applied the magnetic field having the intensity of equal to or larger than 100 Hn [Oe] in the radial direction after the initial magnetization performed by applying a perpendicular magnetic field as shown in the table in Fig. 15. When the magnetic filed having the intensity larger than Hc in the radial direction (Comparative example 1-3) is applied, increase of the noise in reproduced signals is recognized again.

The magnetic layer having Hn of 3000[Oe] is illustrated as an example herein but magnetic layers formed with other magnetic materials tend to have increased noise in reproduced signals by being applied a magnetic field having the intensity larger than Hn.

### [Second embodiment]

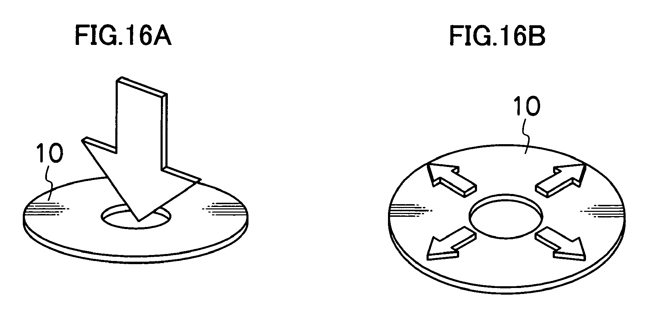

Figs. 16A and 16B are explanatory views to show an embodiment which performs a magnetic cleaning after the magnetic transfer. The slave disk 10 after the initial magnetization or after both of the initial magnetization and the cleaning step in the initial magnetization described before is closely contacted to the master disk 20 (a contact step). A perpendicular magnetic transfer is performed (transfer step) by applying a perpendicular magnetic field in the reverse direction to the initial magnetization as shown in Fig. 16A. After the perpendicular magnetic transfer, the slave disk 10 is magnetically cleaned by being applied an in-plane magnetic field having the intensity of 100 [Oe] to Hn of the magnetic layer 16 in the radial direction (the direction from the center to the outer of the disk) as shown in Fig. 16B. The cleaning step in the initial magnetization is performed without having the master disk 20 closely contacted as well as the initial magnetization. The cleaning step in the initial magnetization is performed to the slave disk 10 alone in the present example but also possible to be performed to the slave disk 10 adhered to the master disk 20.

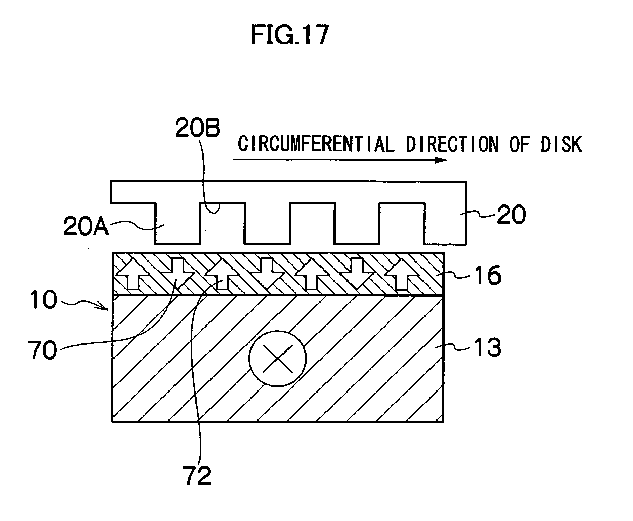

Fig. 17 is a pattern diagram of cross section of the slave disk 10 produced by the steps described in Figs. 11A and 11B. Fig. 17 shows a cross sectional view of the disk along the circumferential direction. The magnetization in the areas of the magnetic layer 16 corresponding to the convex regions 20A of the master disk 20 is reversed in the same direction to the magnetic transfer (the magnetization having the downward direction of arrows shown by 70 which is a reverse direction of the initial magnetization) as shown in Fig. 17. The magnetization in the areas of the magnetic layer 16 corresponding to the concavo regions 20B of the master disk 20 keeps its direction of the initial magnetization (the magnetization having the upward direction of arrows shown by 72 which is same as the direction of the initial magnetizaiton).

The soft magnetic layer 13 is uniformly magnetized in the circumferential direction of the disk so that it can achieve a good signal quality without having a noise caused by a domain wall.

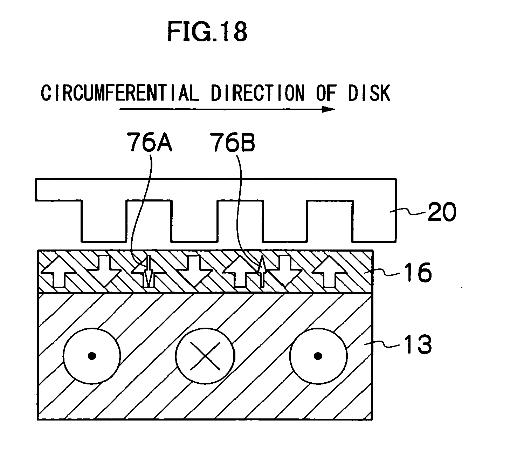

The proving test result without the cleaning step after the magnetic transfer described in Fig. 16B (without the cleaning step in the initial magnetization in Figs. 11A and 11B) is shown in Fig. 18 for reference and comparison.

A magnetic field component (shown as the symbol having · inside of circle) perpendicularly directed to the front surface of the paper and a magnetic field component (shown as the symbol having × inside of circle) perpendicularly directed to the rear surface of the paper are mixed present in the soft magnetic layer 13 as shown in Fig. 18. Magnetic field components (76A and 76B in Fig. 18) in the perpendicular direction to the disk is generated in the area of the magnetic field 16 corresponding to the boundary (the domain wall) of the magnetic field components (in the soft magnetic layer 13) having directions opposed to each other. The magnetic field components 76A and 76B become noise to deteriorate signal quality.

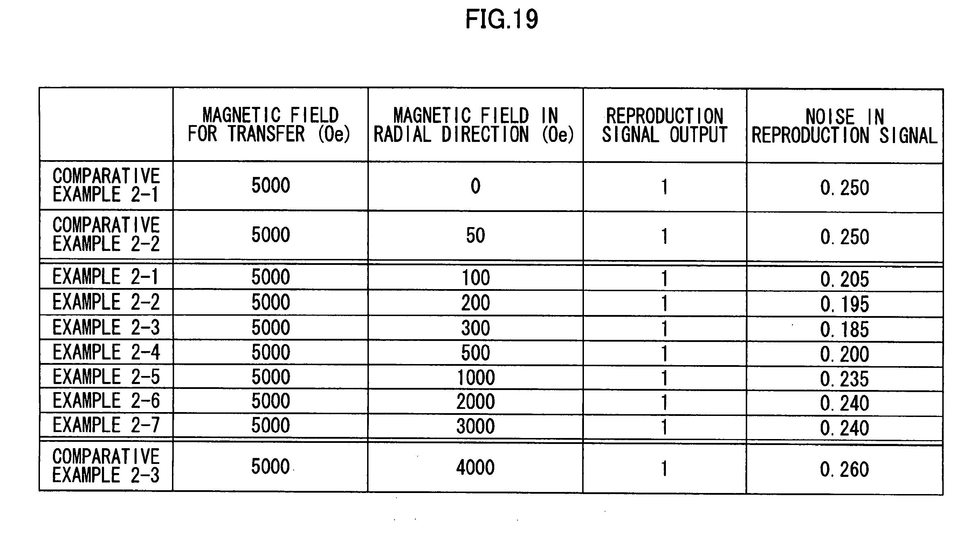

The result of in the proving test measuring advantageous effects of the second embodiment is shown in the table of Fig. 19. The proving test was given with the same slave disk used in the first embodiment. After the slave disk 10 was initialized by being applied a magnetic field in the perpendicular direction for initialization having an intensity of 5000 [Oe]. The slave disk magnetically cleaned by changing an intensity of the magnetic fields in the range of 0 to 4000 [Oe] which was applied in the radial direction after the magnetic transfer was performed to the salve disk 10 by applying a magnetic field having an intensity of 5000 [Oe]. Then the reproduced signals output and the noise in reproduced signals were measured during reproducing the slave disk.

The noise in reproduced signals is reduced in the slave disks (examples 2-1 to 2-7) which are applied the magnetic field having the intensity of equal to or larger than 100 Hn [Oe] in the radial direction after applying a transfer magnetic field as shown in the table in Fig. 19. When the magnetic filed having the intensity larger than Hc in the radial direction (Comparative example 2-3) is applied, increase of the noise in reproduced signals is recognized again.

### [Third embodiment]

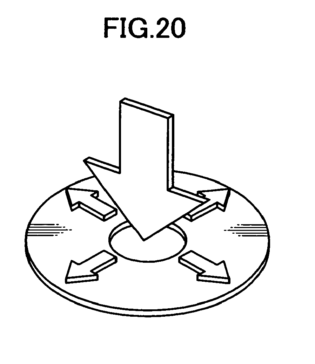

Fig. 20 is an explanatory view to show an embodiment performing a magnetic cleaning in the time of the magnetic transfer (the magnetic cleaning during the magnetic transfer). The slave disk 10 after the initial magnetization or after both of the initial magnetization and the cleaning step in the initial magnetization described before is closely contacted to the master disk 20 (the contact step). A perpendicular magnetic transfer is performed by applying a perpendicular magnetic field in the reverse direction to the initial magnetization as shown in Fig. 20. At a time of the perpendicular magnetic transfer, the slave disk 10 is magnetically cleaned by being applied an in-plane magnetic field having the intensity of 100 [Oe] to Hn of the magnetic layer 16 in the radial direction (the direction from the center to the outer of the disk). The results of the third embodiment are equal to the same of the second embodiment described above (as shown in Fig. 17).

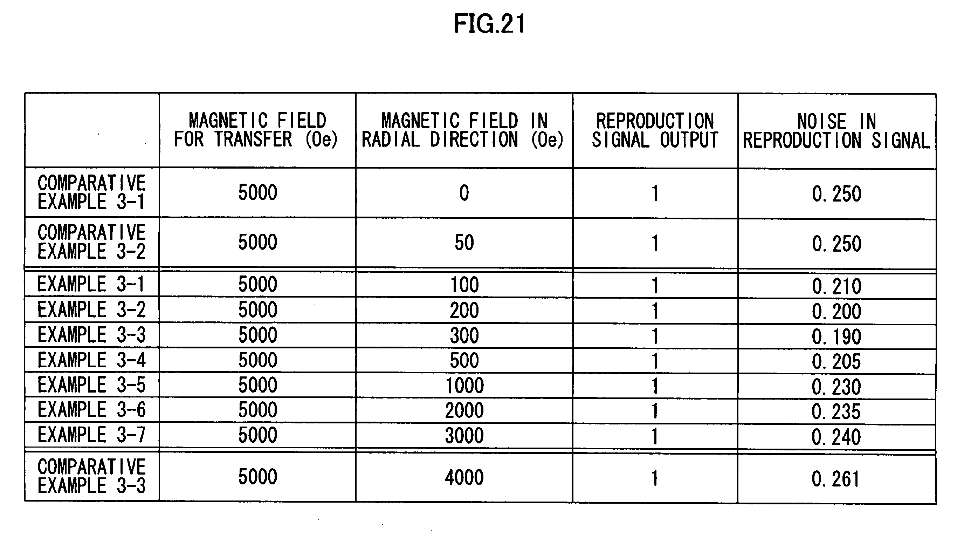

The result of in the proving test measuring advantageous effects of the third embodiment is shown in the table of Fig. 21. The proving test was given with the same slave disk used in the first embodiment. After the slave disk 10 was initialized by being applied a magnetic field in the perpendicular direction for initialization having an intensity of 5000 [Oe]. The slave disk magnetically cleaned by changing an intensity of the magnetic fields in the range of 0 to 4000 [Oe] which was applied in the radial direction during the magnetic transfer was performed to the salve disk 10 by applying a magnetic field having an intensity of 5000 [Oe] in the perpendicular direction. Then the reproduced signals output and the noise in reproduced signals were measured during reproducing the slave disk.

The noise in reproduced signals is reduced in the slave disks (examples 3-1 to 3-7) which are applied the magnetic field having the intensity of equal to or larger than 100 Hn [Oe] in the radial direction at a time of applying a transfer magnetic field as shown in the table in Fig. 21. When the magnetic filed having the intensity larger than Hc in the radial direction (Comparative example 3-3) is applied, increase of the noise in reproduced signals is recognized again.

### [Fourth embodiment]

The magnetic transfer and the magnetic cleaning after the magnetic transfer described in the second embodiment may be performed by the slave disk 10 after initially magnetized and magnetically cleaned in the initial magnetization by the first embodiment.

### [Fifth embodiment]

The magnetic cleaning during the magnetic transfer may be performed by method explained in the third embodiment by using the slave disk 10 after initially magnetized and magnetically cleaned in the initial magnetization by the first embodiment.

### [Sixth embodiment]

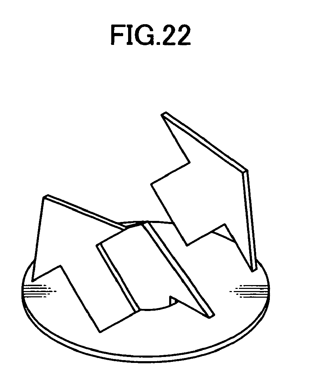

The embodiment performs the initial magnetization by applying the magnetic field inclined within a range of a certain angles relative to the perpendicular line to the surface the medium during the initial magnetization as shown in Fig. 22.

As indicated in Fig. 22, the step of performing the initial magnetization of the slave disk 10 by applying the magnetic field inclined within a range of a certain angles (preferably in the range of ±50 degrees) in the circumferential direction when the line perpendicular to the surface of the medium is set as 0 degree.

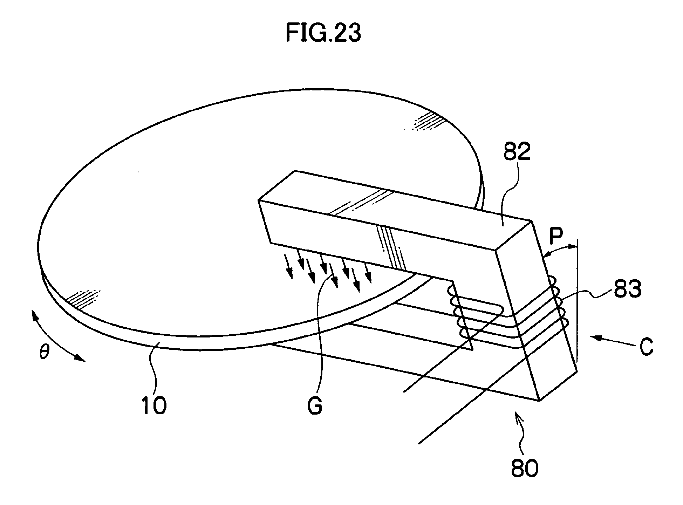

Fig. 23 is a configuration diagram showing a main section of a magnetic field applying device used in the initial magnetization shown in Fig. 22. The magnetic field applying device 80 is an electromagnetic device comprising a core 82 having a gap in the thickness direction of the disk 10 and being wound by a coil 83 as shown in Fig. 23. The magnetic field applying device 80 may be inclined at the angle of P in the radial direction (the tangent direction) of the disk.

The slave disk 10 is hold by a disk holder (not shown) and rotationally transferred in the in-plane direction (the direction of an arrow θ) around the center of the disk which is considered as an axis of rotation by a rotational transfer body. In stead of rotationally transferring the slave disk 10, the magnetic field applying device 80 may be rotationally transferred in the circumferential direction (the direction of an arrow *θ*) relative to the slave disk 10 at rest.

The magnetic field (magnetic field lines G) generated in the gap of the core 82 is applied to the slave disk 10 in the inclined direction having an angle P relative to the perpendicular line to the surface of the slave disk 10 by the configuration in Fig. 23. The initial magnetization is performed by applying an inclined magnetic field generated and rotationally transferring the slave disk 10 and the magnetic field applying device 80 relative to one another as shown in Fig. 22.

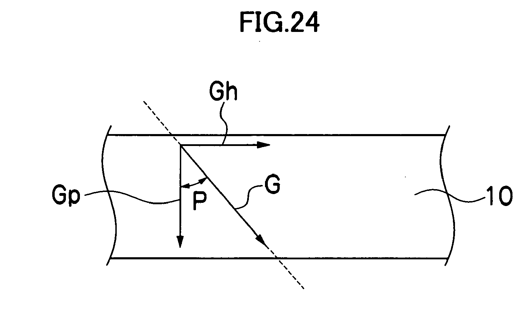

Fig. 24 which is a view on arrow C of Fig. 23 shows a frame format of a magnetic field applied to the slave disk 10 in the configuration in Fig. 23. A horizontal component Gh and a perpendicular component Gp of the magnetic field lines G are applied at the same time if the magnetic field lines G are inclined at the angle of P relative to the perpendicular direction of the slave disk 10 as shown in Fig. 24.

In comparing to the case of having the initial magnetization with a perpendicular magnetic field before a magnetic transfer, it is possible to perform a magnetic transfer having a good signal quality in the low transfer magnetic field intensity (possible to obtain a transfer signal at a high S/N ratio) by performing the initial magnetization by applying the magnetic field inclined in the circumferential direction before the magnetic transfer.

A magnetic field in a perpendicular direction is generally applied to a magnetic layer for perpendicular magnetic recording to reverse a magnetization direction of the magnetic layer. As shown in a critical curve (an asteroid curve) of an external magnetic field applied to reverse the magnetization direction, when a vector of the external magnetic field is moved from inside to outside of the asteroid curve, the magnetization direction in the magnetic layer is reversed. Therefore, a magnetization reversal can be performed with a lower magnetic field intensity comparing to the intensity of the conventional perpendicular transfer magnetic field by using a synthetic magnetic field having two magnetic components directed to the direction of easy magnetization and the direction of difficult magnetization perpendicular to the easy magnetization.

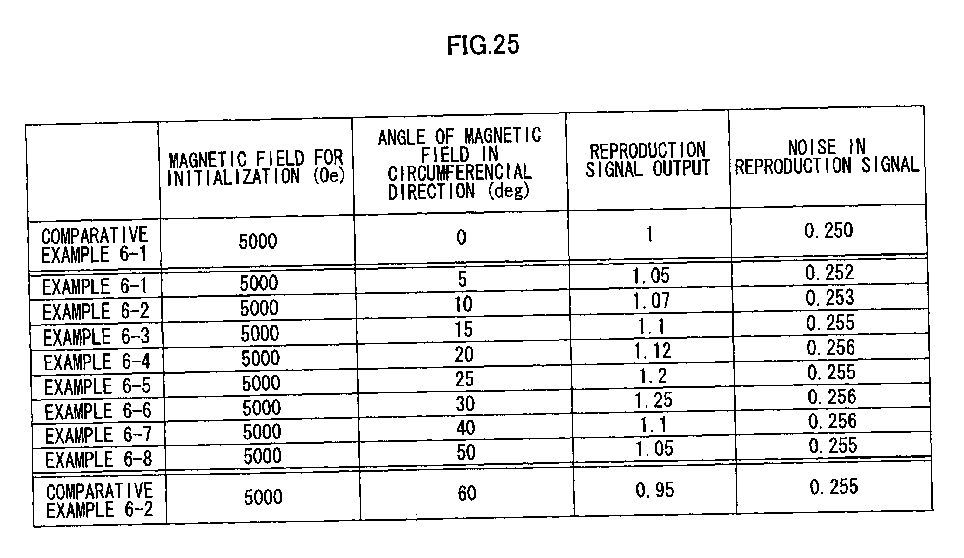

The result of in the proving test measuring advantageous effects of the sixth embodiment is shown in the table of Fig. 25. The proving test was given with the same slave disk used in the first embodiment. An initial magnetization of the slave disk was performed by applying an initial magnetic field having the intensity of 5000 [Oe] which is inclined at an angle of 0 to 60 degrees in the circumferential direction. Then, a magnetic transfer by using the same master disk used in the first embodiment was performed by applying a transfer magnetic field of 5000 [Oe] in the perpendicular direction. After the magnetic transfer above, the reproduced signals output and the noise in reproduced signals were measured during reproducing the slave disk. An inclination of either of two directions relative to the perpendicular line is voluntary set to be +angle (-angle) so the angle P in Fig. 23 is set to be +angle in the present embodiment.

The reproduced signal output was improved as increasing the magnetic field angle in the circumferential direction as shown in Fig. 25 (Examples 6-1 to 6-8). The improvement was recognized when the magnetic field angle in the circumferential direction was increased to 50 degree (Example 6-8). However, when the magnetic field angle in the circumferential direction was increased over 50 degree, it was recognized that the reproduced signal output tended to be decreased (Comparative example 6-2). Additionally, while the reproduced signal noises in Examples 6-1 to 6-8 are slightly increased in comparison to Comparative example 6-1, the reproduced signal outputs of Example 6-1 to 6-8 are improved much more so that S/N ratios of Examples 6-1 to 6-8 are improved.

### [Seventh embodiment]

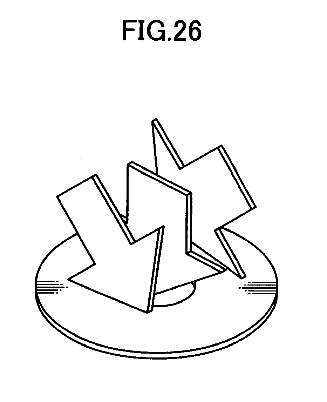

Fig. 26 is an explanatory view to show an embodiment of magnetic transfer. When a magnetic field having a direction opposite to an initial magnetization is applied to a master disk and a slave disk which are adhered together, the magnetic transfer is performed by applying the magnetic field inclined at a certain range of angles to a perpendicular line of a medium.

As shown in Fig. 26, when a perpendicular line of a medium is set as 0 degree, a magnetic transfer step performed by applying an inclined magnetic layer in a certain range of angles (preferably in range of ± 50 degree) in the circumferential direction may be implemented.

The magnetic field applying device described in Fig. 23 can be used in the transfer step shown in Fig. 26 but the direction of the applied magnetic field is reversed.

In comparing to the case of having a magnetic transfer performed by applying a magnetic field in a perpendicular direction, it is possible to perform a magnetic transfer having a good signal quality in the low transfer magnetic field intensity (possible to obtain a transfer signal at a high S/N ratio) by performing the magnetic transfer by applying the magnetic field inclined in the circumferential direction.

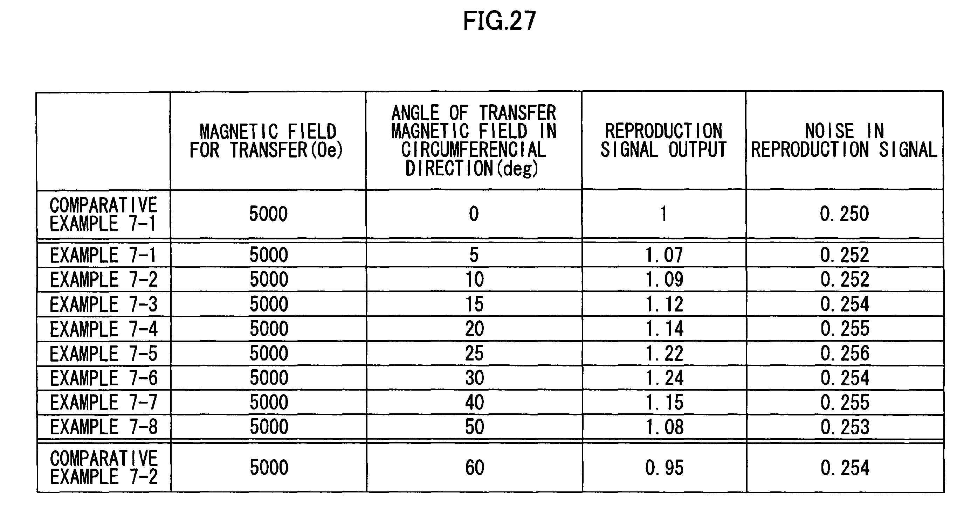

The result of in the proving test measuring advantageous effects of the seventh embodiment is shown in the table of Fig. 27. The proving test was given with the same slave disk used in the first embodiment initialized by being applied a magnetic field having an intensity of 5000 [Oe] in the perpendicular direction. After initialized the slave disk above, a magnetic transfer was performed by applying a magnetic field having an intensity of 5000 [Oe] during changing a magnetic field angle in a circumferential direction in range of 0 to 60 degree by using the master disk in the first embodiment. After the magnetic transfer above, the reproduced signals output and the noise in reproduced signals were measured during reproducing the slave disk.

The reproduced signal output was improved as increasing the magnetic field angle in the circumferential direction as shown in Fig. 27 (Examples 7-1 to 7-8). The improvement was recognized when the magnetic field angle in the circumferential direction was increased to 50 degree (Example 7-8). However, when the magnetic field angle in the circumferential direction was increased over 50 degree, it was recognized that the reproduced signal output tended to be decreased (Comparative example 7-2). Additionally, while the reproduced signal noises in Examples 7-1 to 7-8 are slightly increased in comparison to Comparative example 7-1, the reproduced signal outputs of Example 7-1 to 7-8 are improved much more so that S/N ratios of Example 7-1 to 7-8 are improved.

### [Eighth embodiment]

A magnetic transfer may be performed to the slave disk 10 initially magnetized in the sixth embodiment by using the magnetic transfer method described in the seventh embodiment.

### [Ninth embodiment]

A magnetic transfer may be performed to the slave disk 10 initially magnetized in the first embodiment by using the magnetic transfer method described in the seventh embodiment.

### [Tenth embodiment]

A magnetic transfer may be performed to the slave disk 10 initially magnetized in the sixth embodiment by using the magnetic transfer method described in the second embodiment.

### [Eleventh embodiment]

A magnetic transfer may be performed to the slave disk 10 initially magnetized in the sixth embodiment by using the magnetic transfer method described in the third embodiment.

### [Twelfth embodiment]

An initial magnetization may be performed by applying the inclined magnetic field described (the inclined angle in the circumferential direction relative to the perpendicular direction) in the sixth embodiment instead of using the magnetic field of the perpendicular direction when the initial magnetization is performed by using the first embodiment..

### [Thirteenth embodiment]

A magnetic transfer may be performed by applying the inclined magnetic field described (the inclined angle in the circumferential direction relative to the perpendicular direction) in the seventh embodiment instead of using the magnetic field of the perpendicular direction when the magnetic transfer is performed by using the second embodiment.

### [Fourteenth embodiment]

The magnetic transfer of the thirteenth embodiment may be performed to the slave disk 10 initially magnetized by the twelfth embodiment. Then, the cleaning step after magnetic transfer described in the second embodiment (by applying the weak magnetic field in the radial direction) may be performed.

According to the embodiments of the present invention described above, by the magnetic cleaning process after or at a time of initial magnetization, or the magnetic cleaning process after or at a time of magnetic transfer, or the combination of both, the noise attributed to the weak magnetic under layer can be efficiently reduced, thereby the accuracy of recording and reproducing, etc can be improved. Therefore, it is possible to produce a high quality perpendicular magnetic recording device with a small number of errors.

The embodiment of the present invention provides a configuration applying a magnetic field which includes a magnetic component directed to the direction of difficult magnetization by inclining the direction of the magnetic field applied at the initial magnetization, or the direction of the magnetic field applied at the magnetic transfer, or the both of them, at a certain range of angles in the circumferential direction from the perpendicular line (0 degree) of the medium. It is possible to perform the magnetic reversal with the lower magnetic field comparing to a configuration applying a magnetic field having a magnetic component directed to the direction of easy magnetization only. Therefore, high accurate magnetic transfer can be performed with the magnetic field lower than conventional methods so that a magnetic field applying device can achieve size down and low power consumption.

A perpendicular magnetic recording medium produced by the method of the embodiment in the present invention is used by being installed in a magnetic record reproduction apparatus such as a servo disk apparatus, thereby a high recording density magnetic record reproduction apparatus having a high accurate servo and a good record reproduction characteristic can be obtained.

## Claims

1. A method for magnetic transferring **characterized by** comprising:
an initial magnetization step of performing an initial magnetization by applying a DC magnetic field perpendicular to a disk shaped perpendicular magnetic recording medium (10) which is formed by laminating a soft magnetic layer (13) and a magnetic layer (16) on a substrate (12);
an initial magnetization cleaning step of applying an in-plane magnetic field having an intensity in range equal to or larger than 100 [Oe], to equal to or less than an intensity of an inverse magnetic domain generated magnetic field Hn, to the perpendicular magnetic recording medium (10) after passed through the initial magnetization step in radial direction which directed from a center to an outer of the perpendicular magnetic recording medium (10);
a contact step of closely contacting a concavo-convex pattern on a master medium (20) which corresponds to a information signal to be transferred to the perpendicular magnetic recording medium (10) after passed through the initial magnetization cleaning step by overlapping the master medium (20) with the perpendicular magnetic recording medium (10); and
a transfer step of magnetically transferring the information signal to the magnetic layer (16) of the perpendicular magnetic recording medium (10) by applying a magnetic field to the perpendicular magnetic recording medium (10) in the state of being closely contacted to the master medium (20).

2. A method for magnetic transferring **characterized by** comprising:
an initial magnetization step of performing an initial magnetization by applying a DC magnetic field perpendicular to a disk shaped perpendicular magnetic recording medium (10) which is formed by laminating a soft magnetic layer (13) and a magnetic layer (16) on a substrate (12);
a contact step of closely contacting a concavo-convex pattern on a master medium (20) which corresponds to a information signal to be transferred to the perpendicular magnetic recording medium (10) after passed through the initial magnetization step by overlapping the master medium (20) with the perpendicular magnetic recording medium (10);
a transfer step of magnetically transferring the information signal to the magnetic layer (16) of the perpendicular magnetic recording medium (10) by applying a perpendicular magnetic field directed opposite to the initial magnetization step to the perpendicular magnetic recording medium (10) in the state of being closely contacted to the master medium (20); and
a cleaning step after the transfer of applying an in-plane magnetic field having an intensity in range equal to or larger than 100 [Oe], to equal to or less than an intensity of an inverse magnetic domain generated magnetic field Hn, to the perpendicular magnetic recording medium (10) after passed through the transfer step in radial direction which directed from a center to an outer of the perpendicular magnetic recording medium (10).

3. A method for magnetic transferring **characterized by** comprising:
an initial magnetization step of performing an initial magnetization by applying a DC magnetic field perpendicular to a disk shaped perpendicular magnetic recording medium (10) which is formed by laminating a soft magnetic layer (13) and a magnetic layer (16) on a substrate (12);
a contact step of closely contacting a concavo-convex pattern on a master medium (20) which corresponds to a information signal to be transferred to the perpendicular magnetic recording medium (10) after passed through the initial magnetization step by overlapping the master medium (20) with the perpendicular magnetic recording medium (10);
a cleaning step during magnetic transfer of concurrently performing the steps of: magnetically transferring the information signal to the magnetic layer (16) of the perpendicular magnetic recording medium (10) by applying a perpendicular magnetic field directed opposite to the initial magnetization step to the perpendicular magnetic recording medium (10) in the state of being closely contacted to the master medium (20); and applying an in-plane magnetic field having an intensity in range equal to or larger than 100 [Oe], to equal to or less than an intensity of an inverse magnetic domain generated magnetic field Hn, to the perpendicular magnetic recording medium (10) in radial direction which directed from a center to an outer of the perpendicular magnetic recording medium (10) at the same time.

4. A method for magnetic transferring **characterized by** comprising:
an initial magnetization step of performing an initial magnetization by applying a magnetic field having an oblique direction inclined within a range of ±50 degrees in a circumferential direction to a disk-shaped perpendicular magnetic recording medium (10) which is formed by laminating a soft magnetic layer (13) and a magnetic layer (16) on a substrate (12) when a line perpendicular to the perpendicular magnetic recording medium (10) is set as 0 degree;
a contact step of closely contacting a concavo-convex pattern on a master medium (20) which corresponds to a information signal to be transferred to the perpendicular magnetic recording medium (10) after passed through the initial magnetization step by overlapping the master medium (20) with the perpendicular magnetic recording medium (10); and
a transfer step of magnetically transferring the information signal to the magnetic layer (16) of the perpendicular magnetic recording medium (10) by applying a magnetic field to the perpendicular magnetic recording medium (10) in the state of being closely contacted to the master medium (20).

5. A method for magnetic transferring **characterized by** comprising:
an initial magnetization step of performing an initial magnetization by applying a DC magnetic field perpendicular to a disk shaped perpendicular magnetic recording medium (10) which is formed by laminating a soft magnetic layer (13) and a magnetic layer (16) on a substrate (12);
a contact step of closely contacting a concavo-convex pattern on a master medium (20) which corresponds to a information signal to be transferred to the perpendicular magnetic recording medium (10) after passed through the initial magnetization step by overlapping the master medium (20) with the perpendicular magnetic recording medium (10); and
a transfer step of magnetically transferring the information signal to the magnetic layer (16) of the perpendicular magnetic recording medium (10) by applying a magnetic field having a component in perpendicular direction opposite to the initial magnetization step to the perpendicular magnetic recording medium (10) in the state of being closely contacted to the master medium (20), wherein
when a line perpendicular to the perpendicular magnetic recording medium (10) is set as 0 degree, a magnetic field having an oblique direction inclined within a range of ±50 degrees in a circumferential direction from the line is applied to a perpendicular magnetic recording medium (10).

6. A magnetic recording medium (10), **characterized in that** a servo signal information is recorded by the method of magnetic transfer according to any one of claims 1 to 5.
